# EUROPEAN PATENT SPECIFICATION

(11) **EP 2 990 674 B1**
(45) Date of publication and mention of the grant of the patent: **11.04.2018**
(21) Application number: 15178948.4
(22) Date of filing: 29.07.2015
(51) Int. Cl.: F16C 33/78, F16C 33/58

(54) **SEALING ASSEMBLY, IN PARTICULAR FOR SPHERICAL ROLLER BEARINGS**
DICHTUNGSANORDNUNG INSBESONDERE FÜR KUGELLAGER
DISPOSITIF DE JOINT EN PARTICULIER POUR PALIER A BILLES

(30) Priority: 01.09.2014 IT TO20140686
(43) Date of publication of application: 02.03.2016
(73) Proprietor: Aktiebolaget SKF, 415 50 Göteborg (SE)
(72) Inventor: COGNOLATO, Gianni, 10024 Moncalieri (TO) (IT); FOTI, Claudio, 10046 Poirino (TO) (IT); VILLALOBOS, Héctor, 10121 Torino (IT)
(74) Representative: Tedeschini, Luca

(56) References cited:
- EP-A1- 0 708 263
- US-A- 3 473 856

## Description

### Technical field of the invention

The present invention relates to a sealing assembly, particularly adapted to equip spherical roller bearings, of the type known with the acronym SRB. The invention further relates to a rolling bearing provided with such a sealing assembly.

### Prior art

The sealing assemblies intended to equip rolling bearings of the SRB type must satisfy various needs. Firstly, they must be able to allow relative offsettings between the outer ring and the inner ring of the bearing without the sealing action coming less as a consequence. Furthermore, they must have low friction independently of possible relative offsettings or changes of center distance between the two annular elements, i.e. of the outer ring and the inner ring of a bearing, respectively. Finally, they must be easy to assemble without risk of damage. However, all these features are desirable also for sealing assemblies not specifically intended for SRB type bearings, in particular when the two mechanical members between which the sealing assembly is interposed are subject to issues similar to those found on SRB type bearings. EP0708263A1 does not solve these problems.

### Summary of the invention

It is the object of the present invention to provide for a sealing assembly, in particular adapted to equip a rolling bearing of the SRB type, which is free from the drawbacks described, in particular having low production costs, high rolling body protection efficiency, low friction and small dimensions, high assembly ease and substantial insensibility to possible offsettings between the mechanical elements or members in relative rotation between which the sealing assembly is inserted in use.

According to the invention, a sealing assembly is thus provided having the features illustrated in the appended claims.

Furthermore, a rolling bearing is provided as defined in claim 10.

According to the invention, the particular conformation of the coupling portion of the sealing assembly, in particular at the outer ring of the rolling bearing, and of the C-shaped dynamic sealing lip, in particular intended to couple with an oblique sealing surface of the inner ring of the roller bearing, allow to keep the sealing assembly always in the correct position in its static sealing seat leaving the dynamic sealing lip free to be deformed following the possible offsettings between the inner and outer rings which could occur in use, substantially without increasing the inference of the sealing lip and consequently keeping frictions low. Furthermore, the conformation of the coupling portion allows to insert the sealing assembly easily and rapidly in position using a simple tool, without risking any damage to the sealing assembly or to the housing seat thereof.

### Brief description of the drawings

The invention will now be described with reference to the accompanying drawings which illustrate a non-limitative embodiment thereof, in which:
- figure 1 diagrammatically illustrates a radial section view of a rolling bearing provided with a sealing assembly according to the invention, both axially symmetric and thus only partially illustrated for the sake of simplicity;
- figure 2 illustrates the same view in radial section and on enlarged scale of the sealing assembly in figure 1 of which only half with respect to the symmetry axis is illustrated again;
- figure 3 illustrates a radial section view on further enlarged scale of a detail of the sealing assembly in figure 1;
- figure 4 illustrates on reduced scale a plan view of an annular component of the sealing assembly in figure 1 and 2;
- figures 5 and 6 illustrate on enlarged scale the same detail in figure 3, but according to sections taken along plotting planes V-V and VI-VI, as shown in figure 4; and
- figure 7 shows a detail on enlarged scale of the component in figure 4.

### Detailed description

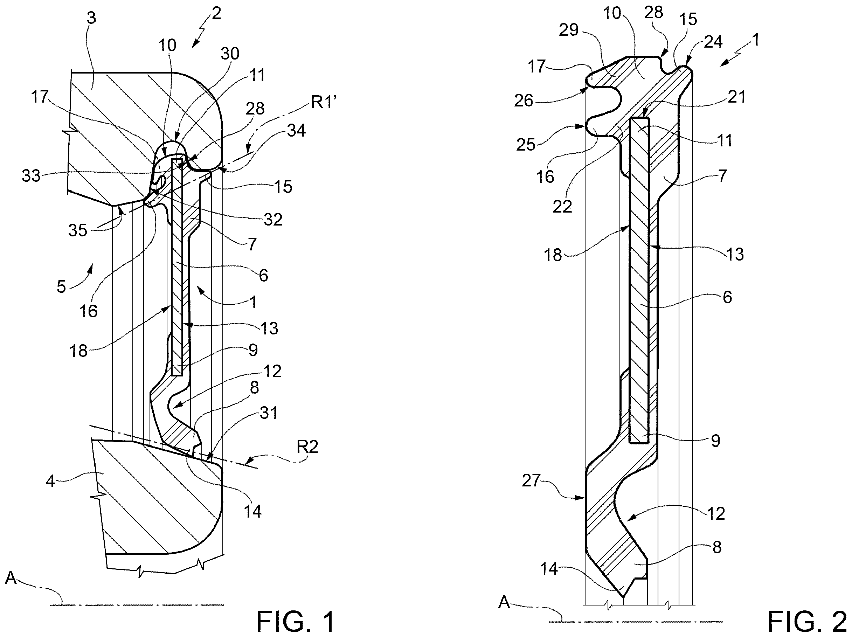

With reference to figures 1 and 2, reference numeral 1 indicates as a whole a low friction sealing assembly, in particular designed to be mounted on and become an integral part of a rolling bearing 2, especially but not exclusively of the so-called SRB (Spherical Roller Bearing) type.

The sealing assembly 1 can be inserted in use between the outer ring 3 and the inner ring 4 of the rolling bearing 2 to protect the rolling bodies, known and not shown for the sake of simplicity, from external contaminants (in SRB bearings constituted by two crowns of rollers) interposed between the outer ring 3 and the inner ring 4 to make them relatively rotational with low friction, as well as to retain possible lubricant between the rings 3 and 4. The rings 3 and 4 and the sealing assembly 1 are symmetric with respect to a symmetry axis A, which is in common to the bearing 2 and the sealing assembly 1, when the rings 3 and 4 are arranged coaxially.

More in general, the sealing assembly 1 can be inserted between any two mechanical members or elements 3 and 4 to protect an annular gap 5 enclosed between the elements 3 and 4 and, in the case of a rolling bearing, normally occupied by the rolling bodies and by the respective rolling tracks (also known and not shown for the sake of simplicity).

The sealing assembly 1 comprises an annular metal insert 6 and an annular seal 7 made of elastomeric material which has been constrained integrally in one piece to the metal insert 6, for instance and preferably by bonding during the step of vulcanizing, according to a compression co-molding process of the seal 7 onto the metal insert 6, known in the art and which therefore is not described in detail for the sake of simplicity.

The annular seal 7 comprises at least one elastically deformable first annular lip 8, which radially extends in cantilever manner from a first annular edge 9 of the metal insert 6 and an annular coupling portion 10 arranged on a second annular edge 11 of the metal insert 6, opposite to the first annular edge 9.

The lip 8, which is intended in use to perform a dynamic sealing action on one of the members 3 and 4 in relative rotation, in the case in point on the inner ring 4, is formed entirely in elastomeric material and, according to a first aspect of the invention, is substantially C-shaped in radial section having a concavity 12 facing the same side of the first face 13 of the metallic insert 6.

The annular lip 8 is completely free of support by the metal insert 6, so as to be able to bend elastically in use both in radial and axial direction, folding towards its concavity 12 and ends with a free end 14 which, in the illustrated example, faces towards the symmetry axis A and is intended to cooperate in sliding manner with the inner ring 4.

The coupling portion 10 is intended to allow the angular coupling of the sealing assembly 1 with the other element in relative rotation, in the case in point with the outer ring 3, and to perform a static sealing action thereon. For this purpose, the coupling portion 10, according to a known arrangement, is provided with at least one elastically deformable second lip belonging to the seal 7.

According to a further aspect of the invention, the coupling portion 10 is provided, in combination, with three elastically deformable annular lips 15, 16 and 17, which extend in cantilever manner from the coupling portion 10 on the side opposite to the metal insert 6; in particular, a second lip 15 and a third lip 16 of the seal 7 extend in cantilever manner from the coupling portion 10 in opposite directions, the lip 15 on the side of the first face 13 of the metal insert 6 and the lip 16 on the side of the second face 18, opposite to the first face 13, of the metal insert 6; the lips 15 and 16, according to the invention, are adapted to assume a deformed configuration in use (figure 1), in which they are aligned substantially along an oblique straight line R1 with respect to the symmetry axis A of the sealing assembly 1.

According to the embodiment shown, the metal insert 6 is incorporated at least in part in the annular seal 7, which covers the first face 13 and also covers, passing over them, both the first and the second annular edge 9 and 11.

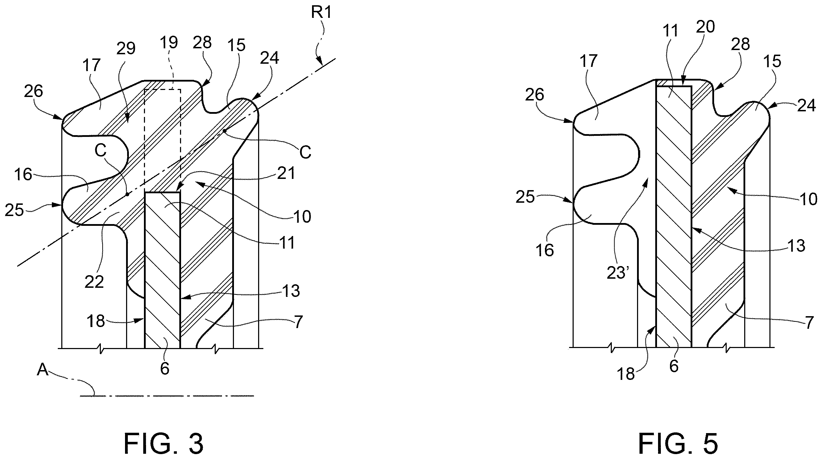

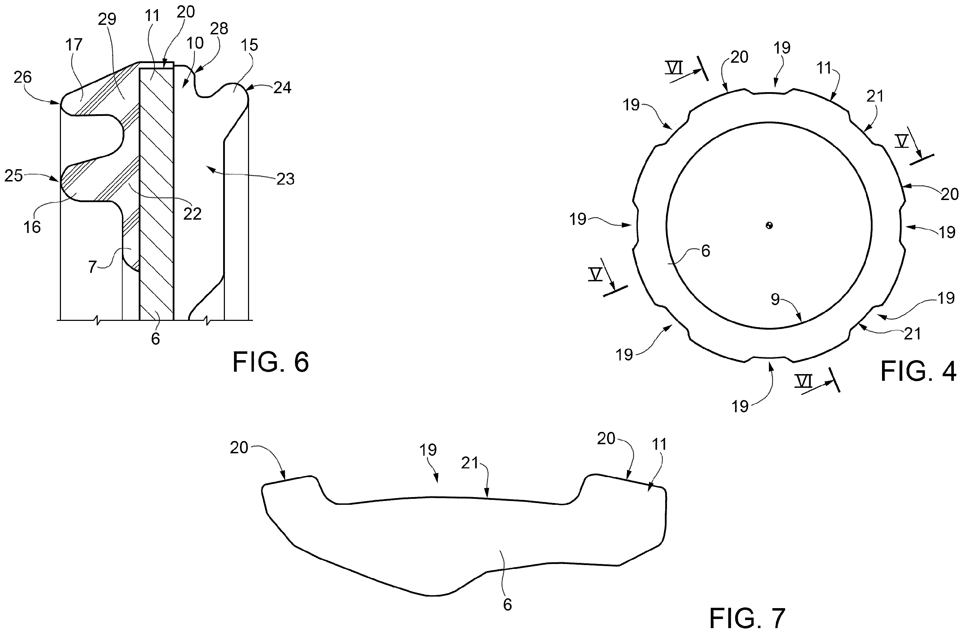

According to a further aspect of the invention, the second annular edge 11 of the metal insert 6 is circumferentially provided (figures 4 and 7) with a plurality of indentations 19, each having a radial depth substantially equal to the radial extension of the coupling portion 10 (figure 3), so that the second annular edge 11 extends alternatively in the coupling portion 10 with its first circumferential stretches 20, and substantially outside the coupling portion 10 with its second circumferential stretches 21. In particular, at the radial indentations 19, the second annular edge 11 ends in radial direction by means of its circumferential stretches 21, substantially at a root portion 22 of the annular lip 16 (figures 2 and 3).

According to another, non-secondary aspect of the invention, the coupling portion 10 is provided, in annular positions different from those occupied by the circumferential indentations 19 of the annular edge 11 and, thus only at selected stretches 20, with a first pair of radial slots 23 (figure 6), aligned and diametrically opposite to each other, which interrupt the circumferential continuity of the coupling portion 10 for the entire radial extension thereof and which are obtained on the side of the annular lip 15, radially cutting also the annular lip 15 itself, and with a second pair of radial slots 23' (figure 5), aligned and diametrically opposite to each other, which also interrupt the circumferential continuity of the coupling portion 10 for the entire radial extension thereof and are obtained on the side of the annular lips 16,17, radially cutting also the lips 16,17 themselves.

The radial slots 23' are obtained in an offset and different position with respect to that occupied by the slots 23 and in particular and preferably arranged at a right angle with respect to the angular position of the radial slots 23. These radial slots 23 and 23' angularly offset with respect to one another allow to release possible overpressure (e.g. caused by the heating of the lubricant grease with a consequent evaporation of part of its components) outside the bearing 2, in particular outside the annular gap 5, without causing the movement of the seal 1 and without the static action exerted by the coupling portion 10 in use coming less.

As shown (figure 3), the lips 15,16 are shaped so as to each have a respective rotation center C for a sealing free end 24 thereof of lip 15 and a sealing free end 25 of lip 16; the rotation centers C of the lips 15 and 16 are arranged on the oblique straight line R1 converging towards the symmetry axis A of the sealing assembly 1.

According to the preferred, but not limiting embodiment of the invention illustrated in the accompanying figures, the first annular edge of the metal insert 6 is a radially inner edge 9 thereof and the second annular edge is a radially outer edge 11 thereof; in this case, the oblique straight line R1 along which the lips 15,16 and the respective rotation centers C are substantially aligned converges towards the symmetry axis A on the side opposite to face 13 of the metal insert 6, i.e. converges towards axis A on the side of the opposite face 18.

In all cases, the lips 16 and 17 have respective sealing free ends 25 for the lip 16, and 26 for the lip 17, both facing towards the side of the second face 18 of the annular insert 6, arranged substantially flush with an extradox portion 27 (figure 2) of the C-shaped lip 8, portion 27 opposite to the concavity 12; furthermore, the lip 17 is substantially oriented obliquely and has the sealing free end 26 thereof facing towards the symmetry axis A on the side of the face 18.

Furthermore, the lip 16 and the lip 17, in undeformed conditions such as those illustrated in figures from 2,3 and 5,6, are substantially parallel to one another and the lip 17 is carried by the radially outermost coupling portion 10 with respect to the lip 16. Conversely, the lip 15 is carried by the coupling portion 10 to a radial position such as to be arranged substantially radially between the lips 16 and 17, but on the side opposite to the lips 16,17 with respect to the metal insert 6.

Finally, according to a further aspect of the invention, the coupling portion 10 has an annular axial shoulder 28 on the side of the lip 15 arranged radially on the outside of, and immediately adjacent to, the second lip 15; the annular shoulder 28 is further substantially aligned in radial direction with a root portion 29 of the lip 17 (figures 3 and 6) and is supported, even though only at all these stretches 20, by the edge 11 of the metal insert 6, which contributes in all cases to providing a given rigidity to the shoulder 28.

With reference again to figure 1, the invention also relates to the rolling bearing 1, in particular when of the SRB type, provided with two sealing assemblies 1 - as those described - mounted on the opposite axial ends, of which only one is shown in figure 1, the other being symmetric.

According to the invention, the coupling portion 10 engages an annular seat 30 obtained radially on the inside of the outer ring 3 and the annular lip 8 cooperates in a sliding manner with an oblique sealing surface 31 of the inner ring 4 obtained radially on the outside of the inner ring 4 and oriented along an oblique direction R2 with respect to the symmetry axis A of the sealing assembly 1.

The annular seat 30 of the outer ring 3 is delimited between a first radially inner edge 32 thereof against which the annular lip 17 of the sealing assembly 1 cooperates so as to be deformed towards the inner ring 4, and a second radially inner edge 33 thereof, opposite to the first, against which the lip 17, by deforming by effect of the shape of the seat 30, pushes the axial annular shoulder 28 of the coupling portion 10 facing towards the lip 15 in use; in this manner, the sealing assembly 1 is axially blocked in the seat 30 from both sides.

Furthermore, the annular seat 30 is externally delimited by a pair of radial shoulders 34,35 against which the second lip 15 and the third lip 16, respectively, cooperate on the opposite side; the pair of radial shoulders 34,35 is further obtained on the outer ring 3 so as to be aligned along a second oblique direction R1', opposite to direction R2 and parallel to the first straight line R1; directions R2 and R1' converge towards the inside of the outer ring 3, and thus towards the annular gap 5, so as to constitute, on one side, a lead-in for the assembly of the sealing assembly 1 in the seat 30 and on the other side, to balance the dynamic thrusts of the seal 7, thrusts which are relieved onto the lips 15 and 16, which rest against the shoulders 34,35 and being elastic also operate, further to perform a static sealing action, as balancing arms to keep the entire sealing assembly 1 always in the correct position, with the metal insert 6 substantially perpendicular to the symmetry axis of the ring 3 also when the latter does not coincide with that of the ring 4, e.g. by effect of an offsetting.

All the objects of the invention are thus reached.

## Claims

1. A sealing assembly (1), in particular for rolling bearings of the SRB type, comprising an annular metal insert (6) and an annular seal made of elastomeric material (7), integrally constrained in one piece to the metal insert (6) for bonding during the step of vulcanizing; the annular seal (7) comprising at least one elastically deformable first annular lip (8), which radially extends in cantilever manner from a first annular edge (9) of the metal insert, the first lip (8) being entirely formed in elastomeric material, and an annular coupling portion (10) arranged on a second annular edge (11) of the metal insert, opposite to the first annular edge, the coupling portion (10) being provided with at least one elastically deformable second annular lip (15), which extends in cantilever manner from the coupling portion on the side opposite to the metal insert (6); wherein:
i - the first annular lip (8) is substantially C-shaped in radial section having a concavity (12) facing the same side of a first face (13) of the metal insert;
ii - the coupling portion (10) is provided with an elastically deformable third (16) and fourth (17) annular lip, which extend in cantilever manner from the coupling portion (10) on the side opposite to the metal insert (6);
iii - the second (15) and the third (16) lips extend in cantilever manner in opposite directions, the second lip (15) from the side of the first face (13) and the third lip (16) from the side of a second face (18), opposite to the first, of the metal insert (6) and are adapted to take in use a deformed conformation in which they are substantially aligned along an oblique straight line (R1) with respect to a symmetry axis (A) of the sealing assembly; **characterized in that**, in combination
iv - the second annular edge (11) of the metal insert is circumferentially provided with a plurality of indentations (19), each having a radial depth substantially equal to the radial extension of the coupling portion (10), so that the second annular edge (11) extends, alternatively, inside and substantially outside the coupling portion (10).

2. A sealing assembly according to claim 1, **characterized in that** the metal insert (6) is embedded at least in part in the annular seal (7), which covers the first face (13) and also covers both the first and the second annular edges (9,11) by passing over them.

3. A sealing assembly (100) according to claim 1 or 2, **characterized in that** at the radial indentations (19), the second annular edge (11) ends in radial direction substantially at a root portion (22) of the third annular lip (16).

4. A sealing assembly according to any one of the preceding claims, **characterized in that** the coupling portion (10) is provided, in angular positions different from those occupied by the circumferential indentations (19) of the second annular edge of the metal insert:
with a first pair of reciprocally aligned and diametrically opposite radial slots (23), which interrupt the circumferential continuity of the coupling portion (10) for the radial extension thereof, and which are obtained on the side of the second annular lip (15) so as to radially cut also the second annular lip;
with a second pair of reciprocally aligned and diametrically opposite radial slots (23'), which interrupt the circumferential continuity of the coupling portion (10) for the whole radial extension thereof, and which are obtained on the side of the third and fourth annular lips (16,17), so as to radially cut also the third and fourth annular lip;
the radial slots of the second pair (23') being obtained in an angular position different, and preferably arranged at a straight angle, with respect to the angular position of the radial slots of the first pair (23).

5. A sealing assembly according to any one of the preceding claims, **characterized in that** the first annular lip (8) is completely free of support by the metal insert (6) so as to be able to bend elastically both in radial and axial direction, thus bending towards the concavity (12) thereof.

6. A sealing assembly according to any one of the preceding claims, **characterized in that** the second and the third lips (15,16) are shaped so as to have, each, a respective rotation center (C) for a sealing free end (24,25) thereof, which rotation centers (C) of the second and third lips are arranged on the oblique line (R1) converging towards the symmetry axis (A) of the sealing assembly.

7. A sealing assembly according to any one of the preceding claims, **characterized in that** the first annular edge (9) of the metal insert is a radially inner edge thereof, and the second annular edge (11) is a radially outer edge thereof, the oblique straight line (R1) along which the second and the third annular lips (15,16) are substantially aligned being converging towards the symmetry axis (A) on the side opposite to the first face (13) of the metal insert.

8. A sealing assembly according to claim 7, **characterized in that** the third and the fourth annular lip (16,17) have respective sealing free ends (25,26) facing the side of the second face (18) of the annular insert and arranged substantially flush with an extradox portion (27) of the first lip (8), opposite to the concavity (12) thereof; the fourth lip (17) being oriented obliquely with the sealing free end (26) thereof toward the symmetry axis (A) on the side of second face (18) of the annular insert; the third and the fourth annular lip (16,17) in non-deformed conditions being substantially parallel to each other, the fourth lip (17) being carried by the coupling portion (10) on the outermost radial side with respect to the third lip (16).

9. A sealing assembly according to claim 8, **characterized in that** the second lip (15) is carried by the coupling portion (10) in a radial position such as to be arranged substantially between the third and the fourth lips (16,17), but on the side opposite to the third and fourth lips with respect to the metal insert (6); on the side of the second lip (15) the coupling portion (10) being provided with an annular axial shoulder (28) arranged radially farther of, and immediately adjacent to, the second lip (15), the annular axial shoulder (28) being further substantially aligned, in radial direction, with a root portion (29) of the fourth lip (17).

10. A rolling bearing (2) comprising an outer ring (3), an inner ring (4) and at least one sealing assembly (1) as claimed in claim 1 and being **characterized in that** the coupling portion (10) engages an annular seat (30) obtained radially on the inside of the outer ring (3) and the first annular lip (8) cooperates in sliding manner with an oblique sealing surface (31) of the inner ring (4) obtained radially on the outside of the inner ring (4) and oriented along a first oblique direction (R2) with respect to the symmetry axis (A) of the sealing assembly; the annular seat (30) of the outer ring being delimited between a radially inner first edge (32) thereof against which the fourth annular lip (17) of the sealing assembly cooperates so as to be deformed towards the inner ring (4) and a radially inner second edge (33) thereof, opposite to the first, against which the fourth lip (17) pushes an annular axial shoulder (28) of the coupling portion (10) facing towards the second lip (15); the annular seat (30) being further externally delimited by a pair of radial shoulders (34,35) against which the second (15) and the third (16) annular lip cooperate on the opposite side; the pair of radial shoulders (43,35) being aligned along a second oblique direction (R1'), opposite to first, the first and the second oblique direction (R2,R1') converging towards the inside of the outer ring (3).
iv - the second annular edge (11) of the metal insert is circumferentially provided with a plurality of indentations (19), each having a radial depth substantially equal to the radial extension of the coupling portion (10), so that the second annular edge (11) extends, alternatively, inside and substantially outside the coupling portion (10).

## Patentansprüche

1. Dichtungsanordnung (1) insbesondere für Wälzlager des SRB-Typs, die einen ringförmigen Metalleinsatz (6) und eine ringförmige Dichtung, die aus einem elastomerischen Material (7) besteht und zum Bonden während des Schritts des Vulkanisierens in einem Stück integral am Metalleinsatz (6) gehalten wird, umfasst; wobei die ringförmige Dichtung (7) mindestens eine elastisch verformbare erste ringförmige Lippe (8), die sich freitragend von einer ersten ringförmigen Kante (9) des Metalleinsatzes radial erstreckt, umfasst, wobei die erste Lippe (8) vollständig aus einem elastomerischen Material gebildet ist, sowie einen ringförmigen Kopplungsabschnitt (10), der an einer zweiten ringförmigen Kante (11) des Metalleinsatzes gegenüber der ersten ringförmigen Kante angeordnet ist, wobei der Kopplungsabschnitt (10) mit mindestens einer elastisch verformbaren zweiten ringförmigen Lippe (15), die sich freitragend vom Kopplungsabschnitt auf der Seite gegenüber dem Metalleinsatz (6) erstreckt, umfasst; wobei:
i - die erste ringförmige Lippe (8) im Radialschnitt im Wesentlichen C-förmig ist und eine Wölbung (12) aufweist, die derselben Seite einer ersten Fläche (13) des Metalleinsatzes zugewandt ist;
ii - der Kopplungsabschnitt (10) mit einer elastisch verformbaren dritten (16) und vierten (17) ringförmigen Lippe versehen ist, die sich auf der Seite gegenüber dem Metalleinsatz (6) freitragend vom Kopplungsabschnitt (10) erstrecken;
iii - die zweite (15) und die dritte (16) Lippe sich freitragend in entgegengesetzte Richtungen erstrecken, die zweite Lippe (15) von der Seite der ersten Fläche (13) und die dritte Lippe (16) von der Seite einer zweiten Fläche (18) gegenüber der ersten des Metalleinsatzes (6), und angepasst sind, eine verformte Gestalt in Gebrauch zu nehmen, in der sie mit Bezug auf eine Symmetrieachse (A) der Dichtungsanordnung im Wesentlichen entlang einer schrägen geraden Linie (R1) ausgerichtet sind; **dadurch gekennzeichnet, dass** in Kombination
iv - die zweite ringförmige Kante (11) des Metalleinsatzes umfänglich mit einer Vielzahl von Vertiefungen (19) versehen ist, von denen jede eine radiale Tiefe aufweist, die im Wesentlichen der radialen Erstreckung des Kopplungsabschnitts (10) gleich ist, derart, dass die zweite ringförmige Kante (11) sich alternativ innerhalb und im Wesentlichen außerhalb des Kopplungsabschnitts (10) erstreckt.

2. Dichtungsanordnung nach Anspruch 1, **dadurch gekennzeichnet, dass** der Metalleinsatz (6) mindestens teilweise in die ringförmige Dichtung (7) eingebettet ist, die die erste Fläche (13) und ebenso sowohl die erste als auch die zweite ringförmige Kante (9, 11), abdeckt, indem sie darüber geführt wird.

3. Dichtungsanordnung (100) nach Anspruch 1 oder 2, **dadurch gekennzeichnet, dass** die zweite ringförmige Kante (11) an den radialen Vertiefungen (19) in Radialrichtung im Wesentlichen an einem Wurzelabschnitt (22) der dritten ringförmigen Lippe (16) endet.

4. Dichtungsanordnung nach einem der vorhergehenden Ansprüche, **dadurch gekennzeichnet, dass** der Kopplungsabschnitt (10) in Winkelpositionen bereitgestellt ist, die von jenen abweichen, die von den umfänglichen Vertiefungen (19) der zweiten ringförmigen Kante des Metalleinsatzes eingenommen werden:
mit einem ersten Paar ineinanderfluchtender und diametral entgegengesetzter radialer Schlitze (23), die die umfängliche Fortführung des Kopplungsabschnitts (10) für die radiale Erstreckung davon unterbrechen und die auf der Seite der zweiten ringförmigen Lippe (15) erhalten werden, um auch die zweite ringförmige Lippe radial zu durchtrennen;
mit einem zweiten Paar ineinanderfluchtender und diametral entgegengesetzter radialer Schlitze (23'), die die umfängliche Fortführung des Kopplungsabschnitts (10) für die gesamte radiale Erstreckung davon unterbrechen und die auf der Seite der dritten und der vierten ringförmigen Lippe (16, 17) erhalten werden, um auch die dritte und die vierte ringförmige Lippe radial zu durchtrennen;
wobei die radialen Schlitze des zweiten Paares (23') in einer Winkelposition erhalten werden, die sich mit Bezug auf die Winkelposition der radialen Schlitze des ersten Paares (23) unterscheiden und vorzugsweise in einem geraden Winkel angeordnet sind.

5. Dichtungsanordnung nach einem der vorhergehenden Ansprüche, **dadurch gekennzeichnet, dass** die erste ringförmige Lippe (8) vom Metalleinsatz (6) in keiner Weise gestützt wird, um in der Lage zu sein, sich sowohl in Radial- als auch in Axialrichtung elastisch zu biegen und sich somit zur Wölbung (12) davon hin zu biegen.

6. Dichtungsanordnung nach einem der vorhergehenden Ansprüche, **dadurch gekennzeichnet, dass** die zweite und die dritte Lippe (15, 16) derart geformt sind, dass sie jeweils ein jeweiliges Rotationszentrum (C) für ein dichtungsfreies Ende (24, 25) davon aufweisen, wobei die Rotationszentren (C) der zweiten und der dritten Lippe auf der schrägen Linie (R1) angeordnet sind, die zur Symmetrieachse (A) der Dichtungsanordnung hin konvergiert.

7. Dichtungsanordnung nach einem der vorhergehenden Ansprüche, **dadurch gekennzeichnet, dass** die erste ringförmige Kante (9) des Metalleinsatzes eine radial innere Kante davon ist und die zweite ringförmige Kante (11) eine radial äußere Kante davon ist, wobei die schräge gerade Linie (R1), entlang der die zweite und die dritte ringförmige Lippe (15, 16) im Wesentlichen fluchten, auf der Seite gegenüber der ersten Fläche (13) des Metalleinsatzes zur Symmetrieachse (A) hin konvergiert.

8. Dichtungsanordnung nach Anspruch 7, **dadurch gekennzeichnet, dass** die dritte und die vierte ringförmige Lippe (16, 17) jeweilige dichtungsfreie Enden (25, 26) aufweisen, die der Seite der zweiten Fläche (18) des ringförmigen Einsatzes zugewandt und mit einem Extradosabschnitt (27) der ersten Lippe (8) gegenüber der Wölbung (12) davon im Wesentlichen bündig sind; wobei die vierte Lippe (17) auf der Seite der zweiten Fläche (18) des ringförmigen Einsatzes mit dem dichtungsfreien Ende (26) davon zur Symmetrieachse (A) hin schräg ausgerichtet ist; die dritte und die vierte ringförmige Lippe (16, 17) in einem nicht verformten Zustand im Wesentlichen parallel zueinander liegen, die vierte Lippe (17) auf der äußersten radialen Seite mit Bezug auf die dritte Lippe (16) vom Kopplungsabschnitt (10) getragen wird.

9. Dichtungsanordnung nach Anspruch 8, **dadurch gekennzeichnet, dass** die zweite Lippe (15) in einer radialen Position vom Kopplungsabschnitt (10) getragen wird, um im Wesentlichen zwischen der dritten und der vierten Lippe (16, 17) angeordnet zu sein, jedoch auf der Seite gegenüber der dritten und der vierten Lippe mit Bezug auf den Metalleinsatz (6); wobei auf der Seite der zweiten Lippe (15) der Kopplungsabschnitt (10) mit einer ringförmigen axialen Schulter (28) bereitgestellt ist, die radial weiter von und unmittelbar neben der zweiten Lippe (15) angeordnet ist, wobei die ringförmige axiale Schulter (28) ferner in Radialrichtung auf einen Wurzelabschnitt (29) der vierten Lippe (17) im Wesentlichen ausgerichtet ist.

10. Wälzlager (2), das einen Außenring (3), einen Innenring (4) und mindestens eine Dichtungsanordnung (1) nach Anspruch 1 umfasst und **dadurch gekennzeichnet ist, dass** der Kopplungsabschnitt (10) in einen ringförmigen Sitz (30) eingreift, der radial auf der Innenseite des Außenrings (3) erhalten wird, und die erste ringförmige Lippe (8) in gleitender Weise mit einer schrägen Dichtungsfläche (31) des Innenrings (4) zusammenwirkt, die radial auf der Außenseite des Innenrings (4) erhalten wird und entlang einer ersten schrägen Richtung (R2) mit Bezug auf die Symmetrieachse (A) der Dichtungsanordnung ausgerichtet ist; wobei der ringförmige Sitz (30) des Außenrings zwischen einer radial inneren ersten Kante (32) davon, gegen die die vierte ringförmige Lippe (17) der Dichtungsanordnung zusammenwirkt, um zum Innenring (4) hin verformt zu werden, und einer radial inneren zweiten Kante (33) davon gegenüber der ersten, gegen die die vierte Lippe (17) eine ringförmige axiale Schulter (28) des Kopplungsabschnitts (10) drückt, der der zweiten Lippe (15) zugewandt ist, begrenzt wird; wobei der ringförmige Sitz (30) ferner durch ein Paar radialer Schultern (34,35), gegen die die zweite (15) und die dritte (16) ringförmige Lippe auf der gegenüberliegenden Seite zusammenwirken, extern begrenzt wird; wobei das Paar radialer Schultern (43,35) entlang einer zweiten schrägen Richtung (R1') gegenüber der ersten ausgerichtet ist, wobei die erste und die zweite schräge Richtung (R2, R1') zur Innenseite des Außenrings (3) hin konvergieren.
iv - die zweite ringförmige Kante (11) des Metalleinsatzes umfänglich mit einer Vielzahl von Vertiefungen (19) versehen ist, von denen jede eine radiale Tiefe aufweist, die im Wesentlichen der radialen Erstreckung des Kopplungsabschnitts (10) gleich ist, derart, dass die zweite ringförmige Kante (11) sich alternativ innerhalb und im Wesentlichen außerhalb des Kopplungsabschnitts (10) erstreckt.

## Revendications

1. Ensemble d'étanchéité (1), en particulier pour roulements du type à rotule sur rouleaux (SRB), comprenant un insert métallique (6) annulaire et un joint d'étanchéité (7) annulaire en matière élastomère, contraint d'une seule pièce avec l'insert métallique (6) pour collage pendant l'étape de vulcanisation, le joint d'étanchéité (7) annulaire comprenant au moins une première lèvre (8) annulaire déformable élastiquement, qui s'étend radialement en porte-à-faux à partir d'un premier bord (9) annulaire de l'insert métallique, la première lèvre (8) étant entièrement constituée de matière élastomère et une partie d'accouplement (10) annulaire disposée sur le second bord (11) annulaire de l'insert métallique, à l'opposé du premier bord annulaire, la partie d'accouplement (10) étant pourvue d'au moins une deuxième lèvre (15) annulaire déformable élastiquement, qui s'étend en porte-à-faux depuis la partie d'accouplement du côté opposé à l'insert métallique (6) ; dans lequel :
i - la première lèvre (8) annulaire a une section radiale sensiblement en forme de C et comporte une concavité (12) tournée du même côté d'une première face (13) de l'insert métallique ;
ii - la partie d'accouplement (10) est pourvue d'une troisième (16) et d'une quatrième (17) lèvre annulaire déformable élastiquement, qui s'étendent en porte-à-faux depuis la partie d'accouplement (10) du côté opposé à l'insert métallique (6) ;
iii - les deuxième (15) et troisième (16) lèvres s'étendent en porte-à-faux dans des directions opposées, la deuxième lèvre (15) depuis le côté de la première face (13) et la troisième lèvre (16) depuis le côté de la seconde face (18), à l'opposé à la première, de l'insert métallique (6), et sont aptes à prendre lors de l'utilisation une conformation déformée dans laquelle elles sont sensiblement alignées le long d'une ligne droite (R1) oblique par rapport à l'axe de symétrie (A) de l'ensemble d'étanchéité,
**caractérisé en ce que**, en combinaison,
iv - le second bord (11) annulaire de l'insert métallique est pourvu sur sa circonférence d'une pluralité d'indentations (19), chacune ayant une profondeur radiale sensiblement égale à l'extension radiale de la partie d'accouplement (10), de sorte que le second bord (11) annulaire s'étend, en alternance, à l'intérieur et sensiblement à l'extérieur de la partie d'accouplement (10).

2. Ensemble d'étanchéité selon la revendication 1, **caractérisé en ce que** l'insert métallique (6) est noyé au moins en partie dans le joint d'étanchéité (7) annulaire, qui recouvre la première face (13) et recouvre également à la fois les premier et second bords (9, 11) annulaires en passant par-dessus eux.

3. Ensemble d'étanchéité (100) selon la revendication 1 ou 2, **caractérisé en ce que**, au niveau des indentations (19) radiales, le second bord (11) annulaire se termine dans une direction radiale sensiblement au niveau de la partie de racine (22) de la troisième lèvre (16) annulaire.

4. Ensemble d'étanchéité selon l'une quelconque des revendications précédentes, **caractérisé en ce que** la partie d'accouplement (10) est pourvue, dans des positions angulaires différentes de celles occupées par les indentations (19) sur la circonférence du second bord annulaire de l'insert métallique :
d'une première paire de fentes radiales (23) alignées l'une avec l'autre et diamétralement opposées, qui interrompent la continuité de la circonférence de la partie d'accouplement (10) pour son extension radiale, et qui sont obtenues sur le côté de la deuxième lèvre (15) annulaire de façon à couper radialement aussi la deuxième lèvre annulaire ;
d'une seconde paire de fentes radiales (23') alignées l'une avec l'autre et diamétralement opposées, qui interrompent la continuité de la circonférence de la partie d'accouplement (10) pour son extension radiale toute entière, et qui sont obtenues sur le côté des troisième et quatrième lèvres (16, 17) annulaires de façon à couper radialement aussi les troisième et quatrième lèvres annulaires ;
les fentes radiales de la seconde paire (23') étant obtenues dans une position angulaire différente, et de préférence disposées à angle droit, par rapport à la position angulaire des fentes radiales de la première paire (23).

5. Ensemble d'étanchéité selon l'une quelconque des revendications précédentes, **caractérisé en ce que** la première lèvre (8) annulaire est totalement dépourvue de soutien par l'insert métallique (6) de façon à pouvoir plier élastiquement à la fois dans les directions radiale et axiale, se courbant ainsi vers sa concavité (12).

6. Ensemble d'étanchéité selon l'une quelconque des revendications précédentes, **caractérisé en ce que** les deuxième et troisième lèvres (15, 16) sont façonnées de manière à avoir, chacune, un centre de rotation (C) respectif pour leur extrémité libre (24, 25) d'étanchéité, lesquels centres de rotation (C) des deuxième et troisième lèvres sont disposés sur la ligne oblique (R1) convergeant vers l'axe de symétrie (A) de l'ensemble d'étanchéité.

7. Ensemble d'étanchéité selon l'une quelconque des revendications précédentes, **caractérisé en ce que** le premier bord (9) annulaire de l'insert métallique est son bord radialement intérieur et le second bord (11) annulaire de l'insert métallique est son bord radialement extérieur, la droite (R1) oblique le long de laquelle les deuxième et troisième lèvres (15, 16) annulaires sont sensiblement alignées convergeant vers l'axe de symétrie (A) du côté opposé à la première face (13) de l'insert métallique.

8. Ensemble d'étanchéité selon la revendication 7, **caractérisé en ce que** la troisième et la quatrième lèvre (16, 17) annulaire ont chacune une extrémité libre (25, 26) d'étanchéité tournée du côté de la seconde face (18) de l'insert annulaire et sont disposées sensiblement dans l'alignement de la partie d'extrados (27) de la première lèvre (8), à l'opposé de sa concavité (12) ;
la quatrième lèvre (17) est orientée obliquement avec son extrémité libre (26) d'étanchéité vers l'axe de symétrie (A) du côté de la seconde face (18) de l'insert annulaire ;
dans des conditions de non-déformation, la troisième et la quatrième lèvre (16, 17) annulaire sont sensiblement parallèles l'une à l'autre, la quatrième lèvre (17) étant portée par la partie d'accouplement (10) sur le côté radial le plus extérieur par rapport à la troisième lèvre (16).

9. Ensemble d'étanchéité selon la revendication 8, **caractérisé en ce que** la deuxième lèvre (15) est portée par la partie d'accouplement (10) dans une position radiale telle qu'elle est disposée sensiblement entre les troisième et quatrième lèvres (16, 17), mais sur le côté à l'opposé des troisième et quatrième lèvres par rapport à l'insert métallique (6) ;
du côté de la deuxième lèvre (15), la partie d'accouplement (10) est pourvue d'un épaulement axial (28) annulaire disposé radialement plus loin que la deuxième lèvre (15) et immédiatement adjacent à celle-ci, l'épaulement axial (28) annulaire est en outre sensiblement aligné, dans la direction radiale, avec la partie de racine (29) de la quatrième lèvre (17).

10. Roulement (2) comprenant une bague extérieure (3), une bague intérieure (4) et au moins un ensemble d'étanchéité (1) selon la revendication 1 et **caractérisé en ce que** la partie d'accouplement (10) s'applique sur un siège (30) annulaire obtenu radialement sur l'intérieur de la bague extérieure (3) et la première lèvre (8) annulaire coopère de manière coulissante avec une surface d'étanchéité (31) oblique de la bague intérieure (4) obtenue radialement sur l'extérieur de la bague intérieure (4) et orientée suivant une première direction (R2) oblique par rapport à l'axe de symétrie (A) de l'ensemble d'étanchéité ;
le siège (30) annulaire de la bague extérieure est délimité entre son premier bord (32) radialement intérieur, contre lequel la quatrième lèvre (17) annulaire de l'ensemble d'étanchéité coopère de façon à se déformer vers la bague intérieure (4), et son second bord (33) radialement intérieur, à l'opposé du premier, contre lequel la quatrième lèvre (17) pousse un épaulement axial (28) annulaire de la partie d'accouplement (10) tourné vers la deuxième lèvre (15) ;
le siège (30) annulaire est en outre délimité extérieurement par une paire d'épaulements radiaux (34, 35) contre lesquels la deuxième (15) et la troisième (16) lèvre annulaire coopèrent de part et d'autre ; la paire d'épaulements radiaux (43, 35) est alignée suivant une deuxième direction (R1') oblique, opposée à la première, la première et la deuxième direction oblique (R2, R1') convergeant vers l'intérieur de la bague extérieure (3).
iv - le second bord (11) annulaire de l'insert métallique est pourvu sur sa circonférence d'une pluralité d'indentations (19), chacune ayant une profondeur radiale sensiblement égale à l'extension radiale de la partie d'accouplement (10), de sorte que le second bord (11) annulaire s'étend, en alternance, à l'intérieur et sensiblement à l'extérieur de la partie d'accouplement (10).
